# EUROPÄISCHE PATENTSCHRIFT

(11) **EP 1 692 035 B1**
(45) Veröffentlichungstag und Bekanntmachung des Hinweises auf die Patenterteilung: **31.12.2008**
(21) Anmeldenummer: 04803313.8
(22) Anmeldetag: 27.11.2004
(51) Int. Cl.: B62D 25/04, B62D 29/00

(54) **TÜRSÄULE FÜR EINE TRAGRAHMENSTRUKTUR**
DOOR PILLAR FOR A SUPPORTING STRUCTURE
MONTANT DE PORTE POUR STRUCTURE DE CHASSIS

(30) Priorität: 11.12.2003 DE 10357907
(43) Veröffentlichungstag der Anmeldung: 23.08.2006
(73) Patentinhaber: Daimler AG, 70327 Stuttgart (DE)
(72) Erfinder: BENZ, Eberhard, 71116 Gärtringen (DE); EIPPER, Konrad, 72108 Rottenburg (DE); GÖTTKER, Stephan, 70192 Stuttgart (DE)
(86) Internationale Anmeldenummer: PCT/EP2004/013480
(87) Internationale Veröffentlichungsnummer: WO 2005/056369

(56) Entgegenhaltungen:
- EP-A- 0 836 983
- EP-A- 1 132 280
- EP-A- 1 180 470
- DE-A1- 10 018 898

## Beschreibung

Die vorliegende Erfindung betrifft eine Türsäule für eine Tragrahmenstruktur einer Fahrzeugkarosserie mit den Merkmalen des Oberbegriffs des Anspruchs 1.

Aus der EP 1 138 581 A2 ist eine derartige Türsäule bekannt, die einen oberen Abschnitt sowie einen unteren Abschnitt aufweist. Der obere Abschnitt erstreckt sich von einem Fahrzeugdach bis zu einer Fahrzeugbordkante, während sich der untere Abschnitt von dieser Fahrzeugbordkante in Richtung eines Fahrzeugbodens erstreckt. Die bekannte Türsäule ist einstückig als dünnwandiges Stahlgußteil ausgestaltet. Mit einem Karosseriebauteil, das aus dünnwandigem Stahlguß hergestellt und nicht - wie bisher üblich - aus mehreren Blechteilen zusammengebaut ist, kann eine erhebliche Gewichtseinsparung, z.B. in der Größenordnung von etwa 25 % erreicht werden. Des weiteren können Wanddicke sowie Formgebung nahezu beliebig an die jeweiligen Festigkeitserfordernisse angepasst werden. Insbesondere lassen sich somit Wandstärken erreichen, die bei vergleichbaren, herkömmlichen Karosseriebauteilen aus Blech auftreten. Ebenso lassen sich sehr komplexe Bauteile in einem einzigen Stück herstellen, so dass der Aufwand für das Zusammenbauen mehrerer einzelner Blechbauteile entfällt.

Die bekannte Türsäule ist als A-Säule oder B-Säule der Tragrahmenstruktur ausgestaltet.

Aus der WO 03/031252 A1 ist es bekannt, eine als dünnwandiges Stahlgußteil ausgebildete Türsäule, insbesondere eine A-Säule eines Cabriolets, als dünnwandiges Stahlgußteil auszubilden, derart, dass es eine im wesentlichen fachwerkartige Hülle besitzt, die zumindest teilweise durch einen Kern aus Metallschaum oder aus metallischen Hohlkugeln gefüllt und somit verstärkt ist.

Die EP 1 180 470 A1 beschreibt eine Kraftfahrzeugtragsäule gemäß dem Oberbegriff des Anspruchs 1, die im oberen Bereich aus einem Längsprofil aus Stahl dargestellt ist und aus einem martensitischen Werkstoffgefüge dargestellt ist. Der untere Teil dieser Tragsäule ist ebenfalls aus einer Eisenlegierung mit einer höheren Duktilität ausgebildet, die überwiegend ferritischperlitisches Werkstoffgefüge umfasst. Ferner sei noch auf die Druckschriften EP 1 132 280 A1, EP 836 983 A1 und DE 100 18 898 A1 als Veröffentlichung verwiesen, die den allgemeinen Stand der Technik darstellen.

Die Türsäulen der Tragrahmenstruktur besitzen beim fertigen Kraftfahrzeug eine wichtige Sicherheitsfunktion, da sie die Fahrgastzelle im Crashfall, insbesondere bei einem Überschlag des Fahrzeugs vor einer für die Insassen bedrohlichen Verformung schützen helfen. Dementsprechend müssen die Türsäulen vor allem in ihrem oberen Abschnitt eine besonders große Festigkeit besitzen. Derartige Festigkeitswerte können bislang mit Leichtmetalllegierungen nicht erreicht werden; folglich werden die Türsäulen bisher stets aus Eisen bzw. Eisenlegierungen, vorzugsweise aus Stahl, hergestellt. Eisenwerkstoffe sind jedoch vergleichsweise schwer, so dass die Türsäulen ein vergleichsweise hohes Gewicht aufweisen. Zur Resourcenschonung ist es jedoch wünschenswert, dass moderne Kraftfahrzeuge möglichst leicht bauen, was zum einen zu einem reduzierten Kraftstoffverbrauch und zum anderen zu einer reduzierten Schadstoffemission führt.

Die vorliegende Erfindung beschäftigt sich mit dem Problem, für eine Türsäule der eingangs genannten Art eine verbesserte Ausführungsform anzugeben, die es insbesondere ermöglicht, für ein damit ausgestattetes Fahrzeug ein reduziertes Gewicht zu erzielen.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Türsäule in zumindest zwei Komponenten aufzutrennen, die zwar fest miteinander verbunden sind, jedoch aus unterschiedlichen Materialien hergestellt sind. Zum einen handelt es sich dabei um einen Säulenkörper, der sich zumindest im oberen Abschnitt der Türsäule erstreckt und der aus Eisen bzw. aus einer Eisenlegierung hergestellt ist. Zum anderen handelt es sich um einen Säulenfuß, der sich zumindest im unteren Abschnitt der Türsäule erstreckt und aus einer Leichtmetalllegierung hergestellt ist. Die erfindungsgemäß vorgeschlagene Hybridbauweise ermöglicht es, den beiden Komponenten der Türsäule unterschiedliche Funktionen zuzuordnen. Dadurch können die beiden Komponenten hinsichtlich Materialauswahl und insbesondere hinsichtlich Formgebung und Herstellungsverfahren im Hinblick auf die jeweils zugeordnete Funktion optimiert werden. Der aus Eisen oder Eisenlegierung hergestellte Säulenkörper kann ohne weiteres mit der für die Türsäule erforderlichen Stabilität ausgestattet werden. Hierbei wurde erkannt, dass die hohe Festigkeit der Türsäule an sich nur im oberen Abschnitt benötigt wird, da im unteren Abschnitt andere Bestandteile der Tragrahmenstruktur zusätzlich zum Schutz der Fahrgastzelle vor Verformung beitragen. Hieraus folgt nun die Erkenntnis, dass der Säulenfuß mit einer geringeren Stabilität auskommt, so dass dieser aus einer Leichtmetalllegierung hergestellt werden kann, um im unteren Abschnitt der Türsäule Gewicht einzusparen. Über dem Säulenfuß erfolgt dabei gleichzeitig die Anbindung des Säulenkörpers an die übrige Tragrahmenstruktur.

Entsprechend einer vorteilhaften Ausführungsform erstreckt sich der Säulenkörper bis in den unteren Abschnitt hinein, vorzugsweise bis zum Fahrzeugboden. Auf diese Weise kann eine besonders intensive Kopplung zwischen Säulenfuß und Säulenkörper im unteren Abschnitt ausgebildet werden. Dies verbessert die Übertragung der im Betrieb bzw. im Crashfall auftretenden Kräfte, wodurch für die Fahrgastzelle die gewünschte Steifigkeit erreicht bzw. verbessert werden kann.

Von besonderem Interesse ist eine Ausführungsform, bei welcher der Säulenfuß als Gußteil ausgebildet ist und an den Säulenkörper angegossen ist. Bei einer derartigen Ausführungsform kann auf besonders einfache Weise der Säulenkörper im unteren Abschnitt in den Säulenfuß integriert werden. Bereits durch das Angießen kann eine hinreichend feste Verbindung zwischen Säulenkörper und Säulenfuß erreicht werden. Durch das Angießen des Säulenfußes an den Säulenkörper können zusätzliche Montageschritte zur Verbindung des Säulenkörpers mit dem Säulenfuß entfallen.

Grundsätzlich kann der Säulenkörper beliebig hergestellt sein, z.B. kann der Säulenkörper als einteiliges Gußteil, insbesondere als dünnwandiges Gußteil, ausgestaltet sein. Ebenso ist es möglich, den Säulenkörper als einteiliges oder mehrteiliges Blechbauteil auszugestalten.

Weitere wichtige Merkmale und Vorteile der Erfindung ergeben sich aus den Unteransprüchen, aus der Zeichnung und aus der zugehörigen Figurbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

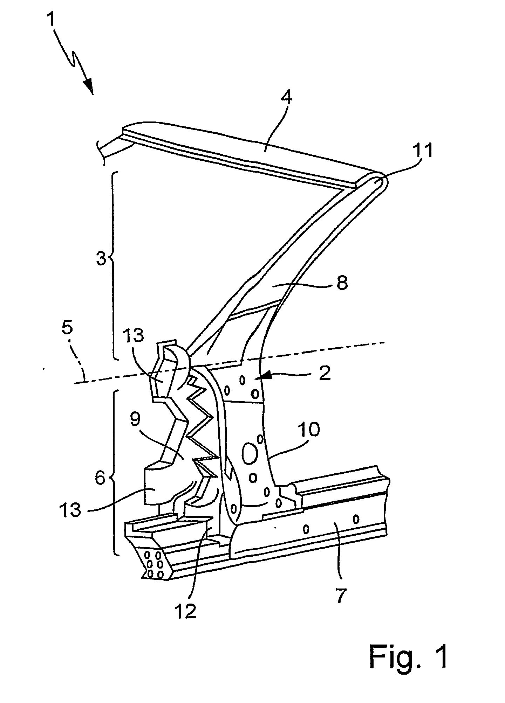

Die einzige Figur 1 zeigt eine vereinfachte perspektivische Ansicht auf einen mit einer erfindungsgemäßen Türsäule ausgestatteten Bereich einer Tragrahmenstruktur.

Entsprechend Fig. 1 umfasst eine nur teilweise dargestellte Tragrahmenstruktur 1 einer im Übrigen nicht dargestellten Fahrzeugkarosserie zumindest eine Türsäule 2, die nach der Erfindung ausgestaltet ist. Im vorliegenden Fall handelt es sich bei der Türsäule 2 um eine bezüglich der Fahrtrichtung links angeordnete A-Säule des Fahrzeugs, wobei es sich hier außerdem um die A-Säule 2 eines Cabriolet-Fahrzeugs handelt. Grundsätzlich kann auch die nicht gezeigte rechte A-Säule in entsprechender Weise nach der Erfindung aufgebaut sein. Es ist klar, dass bei einem anderen Kraftfahrzeug, insbesondere bei Personenkraftwagen auch die B-Säule und/oder die C-Säule und/oder die D-Säule nach der Erfindung ausgestaltet sein kann bzw. können. Nachfolgend wird jedoch die erfindungsgemäße Tragsäule 2 anhand der als A-Säule 2 eines Cabriolets ausgestalteten Variante näher erläutert, wobei dies ohne Beschränkung der Allgemeinheit erfolgt.

Entsprechend Fig. 1 erstreckt sich die Tragsäule 2 in einem durch eine geschweifte Klammer gekennzeichneten oberen Abschnitt 3 von einem hier nur durch einen oberen Querträger 4 repräsentierten Fahrzeugdach bis zu einer durch eine strichpunktierte Linie angedeuteten Fahrzeugbordkante 5 und in einem ebenfalls durch eine geschweifte Klammer gekennzeichneten unteren Abschnitt 6 von der Fahrzeugbordkante 5 bis zu einem durch einen Fahrzeugschweller 7 repräsentierten Fahrzeugboden. Erfindungsgemäß ist nun die Türsäule 2 aus einem Säulenkörper 8 und einem Säulenfuß 9 aufgebaut. Dabei erstreckt sich der Säulenkörper 8 zumindest im oberen Abschnitt 3, während sich der Säulenfuß 9 zumindest im unteren Abschnitt 6 erstreckt. Von besonderer Bedeutung ist dabei, dass der Säulenkörper 8 aus Eisen oder aus einer Eisenlegierung, insbesondere aus Stahl, hergestellt ist, während der Säulenfuß 9 aus Leichtmetall, insbesondere Aluminium, oder aus einer Leichtmetalllegierung, insbesondere aus einer Aluminiumlegierung, hergestellt ist. Die beiden Komponenten der Türsäule 2, also der Säulenkörper 8 und der Säulenfuß 9, sind fest miteinander verbunden und bilden dadurch eine einheitliche Baugruppe. Über den Säulenfuß 9 erfolgt die Anbindung der Türsäule 2 an die übrige Tragrahmenstruktur 1, insbesondere an den Fahrzeugboden.

Bei der hier gezeigten bevorzugten Ausführungsform erstreckt sich der Säulenfuß 9 ausschließlich im unteren Abschnitt 6, während der Säulenkörper 8 zumindest teilweise in den unteren Abschnitt 6 hineinragt. Im vorliegenden Fall erstreckt sich der Säulenkörper 8 vom Fahrzeugdach bis zum Fahrzeugboden. Auf diese Weise erfolgt die Verbindung zwischen Säulenkörper 8 und Säulenfuß 9 ausschließlich im unteren Abschnitt 6. Im vorliegenden Fall bildet der Säulenkörper 8 im unteren Abschnitt 6 eine Art Verkleidung für einen Teilbereich des Säulenfußes 9, indem ein im unteren Abschnitt 6 angeordneter unterer Bereich 10 des Säulenkörpers 8 eine Außenseite des Säulenfußes 9 zumindest teilweise bedeckt. Im vorliegenden Fall erstreckt sich dieser untere Bereich 10 am Säulenfuß 9 von der außen liegenden Fahrzeugseite bis zu einer Rückseite, wodurch die Außenseite des Säulenfußes 9 zumindest an zwei Seiten schalenförmig verkleidet ist.

Der Säulenkörper 8 besitzt an seinem oberen Ende eine Dach-Anbindungszone 11. Im Bereich dieser Dach-Anbindungszone 11 ist der Säulenkörper 8 an das Fahrzeugdach bzw. an dem gezeigten Dachträger 4 fest angebunden. Insbesondere bei einem Cabriolet-Fahrzeug sind die beiden A-Säulen 2 über den oberen Dachquerträger 4 sowie über einen im Fahrzeugboden angeordneten, hier nicht gezeigten Bodenquerträger zu einem ringförmig geschlossenen Rahmen miteinander verbunden, der auch als Vorderwandrahmen bezeichnet wird. Um den Säulenkörper 8 möglichst einfach mit dem Dachquerträger 4 verbinden zu können, ist die Dach-Anbindungszone 11 auf entsprechende Weise ausgestaltet bzw. zur Anbindung an den Dachträger 4 vorbereitet.

Der Säulenfuß 9 ist an seiner Unterseite mit einer Boden-Anbindungszone 12 ausgestattet, die es ermöglicht, den Säulenfuß 9 fest mit dem Fahrzeugboden bzw. hier mit dem Schweller 7 zu verbinden. Zweckmäßig ist die Boden-Anbindungszone 12 dabei so gestaltet, dass die Verbindung mit dem Fahrzeugboden besonders einfach hergestellt werden kann. Im vorliegenden Fall ist die Kontur der Boden-Anbindungszone 12 komplementär zur Kontur des Schwellers 7 geformt, wodurch eine formschlüssige Abstützung des Säulenfußes 9 am Schweller 7 erreicht wird, was gleichzeitig die Herstellung einer hinreichend festen Verbindung zwischen Säulenfuß 9 und Fahrzeugboden erleichtert.

Zweckmäßig ist der Säulenfuß 9 außerdem mit wenigstens einer Struktur-Anbindungszone 13 ausgestattet, mit deren Hilfe der Säulenfuß 9 an zumindest ein weiteres, hier nicht gezeigtes Bauteil der Tragrahmenstruktur 1 fest angebaut werden kann. Beispielsweise können über die wenigstens eine Struktur-Anbindungszone 13 vordere Längsträger der Tragrahmenstruktur 1 an die Türsäule 2 angebaut werden. Auch hier sind die Struktur-Anbindungszonen 13 zweckmäßig für die Herstellung der jeweiligen Verbindung vorbereitet, insbesondere durch eine entsprechende Formgebung.

Grundsätzlich kann der Säulenkörper 8 auf beliebige Weise hergestellt werden. Für hohe Steifigkeitsanforderungen haben sich einteilige oder mehrteilige Blechbauteile zum Aufbau der Tragrahmenstruktur 1 bewährt, so dass gemäß einer ersten Variante der Säulenkörper 8 als Blechbauteil ausgestaltet und somit aus einem oder aus mehreren Blechteilen aufgebaut ist. Gemäß einer zweiten Variante kann der Säulenkörper 8 alternativ auch als einteiliges Gußteil, vorzugsweise als dünnwandiges Gußteil, ausgestaltet sein. Insbesondere bei dünnwandigen Gußteilen, die Wandstärken zwischen 1,0 und 4,0 mm, insbesondere zwischen 1,5 und 3,0 mm besitzen können, lassen sich hinreichend steife Strukturen erzielen, die außerdem vergleichsweise leicht bauen. Beispielsweise kann der Säulenkörper 8 im oberen Abschnitt 3 eine fachwerkartige Struktur aufweisen, die außerdem bionisch optimiert sein kann. Moderne Berechnungstechniken, wie z. B. die FEM-Technik, also die Finite-Elemente-Methode, ermöglichen hier eine Optimierung des Gußbauteils hinsichtlich hoher Stabilität und geringem Gewicht.

Für den Säulenfuß 9 wird eine Ausführungsform bevorzugt, bei welcher der Säulenfuß 9 als einteiliges Gußteil ausgestaltet ist. Auch hier kann die Ausbildung des Säulenfußes 9 als dünnwandiges Gußteil vorteilhaft sein.

Die Herstellung der erfindungsgemäßen Türsäule 2 kann beispielsweise dadurch vereinfacht werden, dass zunächst der Säulenkörper 8 auf konventionelle Art als Blechbauteil oder als Gußbauteil hergestellt wird, während der Säulenfuß 9 anschließend an den vorab hergestellten Säulenkörper 8 angegossen wird. Auf diese Weise kann mit der Herstellung des Säulenfußes 9 gleichzeitig eine intensive Verbindung zwischen Säulenkörper 8 und Säulenfuß 9 hergestellt werden. Nachträgliche Montageschritte zum Zusammenbau der Türsäule 2 können dadurch entfallen.

Eine intensive Verankerung des Säulenkörpers 8 am bzw. im Säulenfuß 9 kann beispielsweise dadurch erreicht werden, dass zwischen Säulenfuß 9 und Säulenkörper 8 eine formschlüssige und/oder stoffschlüssige Verbindung hergestellt wird.

Zur Erzielung einer Formschlußverbindung kann der Säulenkörper 8 in dem Bereich, der vom Säulenfuß 9 umgossen wird, beispielsweise zumindest einen Durchbruch aufweisen, der durch den Gießvorgang vom Säulenfuß 9 durchsetzt ist. Zusätzlich oder alternativ kann der Säulenkörper 8 zumindest eine Hinterschnittkontur aufweisen, z. B. in Form einer quer abstehenden Lasche oder einer abgewinkelten Kante, die durch das Angießen vom Säulenfuß 9 eingefaßt ist. Eine derartige Formschlußverbindung kann regelmäßig nur durch Zerstörung des Säulenkörpers 8 und/oder des Säulenfußes 9 wieder gelöst werden.

Eine Stoffschlußverbindung zwischen Säulenkörper 8 und Säulenfuß 9 kann beispielsweise dadurch hergestellt werden, dass der Säulenkörper 8 beim Angießen des Säulenfußes 9 zumindest teilweise oberflächlich anschmilzt, wodurch es zu einer Fusion der unterschiedlichen Metalle bzw. Metalllegierungen kommen kann.

Alternativ zum Angießen des Säulenfußes 9 an den Säulenkörper 8 kann der Säulenkörper 8 auch mit dem Säulenfuß 9 verschraubt, vernietet, verschweißt und/oder verlötet sein.

Wesentlich ist bei der Erfindung, dass zwei wichtige Funktionen der Türsäule 2, nämlich einerseits die Aussteifung der Fahrgastzelle im oberen Abschnitt 3 und andererseits die Einbindung der Türsäule 2 in die übrige Tragrahmenstruktur 1, voneinander separiert und getrennten Komponenten der Türsäule 2, nämlich dem Säulenkörper 8 und dem Säulenfuß 9, zugeordnet sind. Durch die Herstellung des Säulenkörpers 8 aus Eisen bzw. aus Eisenlegierung und die Herstellung des Säulenfußes 9 aus Leichtmetall bzw. aus Leichtmetalllegierung, erfolgt eine Adaption von Säulenkörper 8 und Säulenfuß 9 an die ihnen jeweils zugeordnete Funktion. Der aus Eisen oder Eisenlegierung hergestellte Säulenkörper 8 kann im oberen Abschnitt 3 die gewünschte Festigkeit bereitstellen, während der aus Leichtmetall oder Leichtmetalllegierung hergestellte Säulenfuß 9 ohne weiteres den Einbau der Türsäule 2 in die übrige Tragrahmenstruktur 1 ermöglicht und dabei gleichzeitig einen Gewichtsvorteil bringt.

## Patentansprüche

1. Türsäule für eine Tragrahmenstruktur (1) einer Fahrzeugkarosserie,
- mit einem oberen Abschnitt (3), der sich von einem Fahrzeugdach bis zu einer Fahrzeugbordkante (5) erstreckt,
- mit einem unteren Abschnitt (6), der sich von der Fahrzeugbordkante (5) in Richtung eines Fahrzeugbodens erstreckt, wobei
die Türsäule (2) einen sich im oberen Abschnitt (3) erstreckenden Säulenkörper (8) aus Eisen oder Eisenlegierung sowie einen damit fest verbundenen, sich im unteren Abschnitt (6) erstreckenden Säulenfuß (9) aufweist, **dadurch gekennzeichnet, daß** der sich im unteren Abschnitt erstreckenden Säulenfuß als einteiliges Gußteil aus Leichtmetall oder Leichtmetalllegierung ausgestaltet ist.

2. Türsäule nach Anspruch 1,
**dadurch gekennzeichnet,**
- **dass** sich der Säulenfuß (9) ausschließlich im unteren Abschnitt (6) erstreckt,
- **dass** sich der Säulenkörper (8) zumindest teilweise in den unteren Abschnitt (6) hinein erstreckt,
- **dass** der Säulenkörper (8) im unteren Abschnitt (6) mit dem Säulenfuß (9) verbunden ist.

3. Türsäule nach Anspruch 1 oder 2,
**dadurch gekennzeichnet,**
**dass** sich der Säulenkörper (8) vom Fahrzeugdach bis zur Fahrzeugbordkante (5) oder bis in den unteren Abschnitt (6) hinein oder bis zum Fahrzeugboden erstreckt.

4. Türsäule nach einem der Ansprüche 1 bis 3,
**dadurch gekennzeichnet,**
**dass** der Säulenkörper (8) eine Dach-Anbindungszone (11) aufweist, die zur Ausbildung einer festen Verbindung mit dem Fahrzeugdach und/oder mit einem Dachträger (4) ausgestaltet ist.

5. Türsäule nach einem der Ansprüche 1 bis 4,
**dadurch gekennzeichnet,**
**dass** der Säulenfuß (9) eine Boden-Anbindungszone (12) aufweist, die zur Ausbildung einer festen Verbindung mit dem Fahrzeugboden ausgestaltet ist.

6. Türsäule nach einem der Ansprüche 1 bis 5,
**dadurch gekennzeichnet,**
**dass** der Säulenfuß (9) wenigstens eine Strukturanbindungs-Zone (13) aufweist, die zur Ausbildung einer festen Verbindung mit einem Bestandteil der Tragrahmenstruktur (1) ausgestaltet ist.

7. Türsäule nach einem der Ansprüche 1 bis 6,
**dadurch gekennzeichnet,**
**dass** der Säulenkörper (8) als ein- oder mehrteiliges Blechbauteil oder als einteiliges Gußteil, insbesondere als dünnwandiges Gußteil, ausgestaltet ist.

8. Türsäule nach einem der Ansprüche 1 bis 7,
**dadurch gekennzeichnet,**
**dass** der Säulenfuß (9) an den Säulenkörper (8) angegossen ist.

9. Türsäule nach einem der Ansprüche 1 bis 8,
**dadurch gekennzeichnet,**
**dass** der Säulenkörper (8) mit dem Säulenfuß (9) verschraubt und/oder vernietet und/oder verschweißt und/oder verlötet ist.

10. Türsäule nach einem der Ansprüche 1 bis 9,
**dadurch gekennzeichnet,**
**dass** der Säulenkörper (8) im unteren Abschnitt (6) den Säulenfuß (9) an dessen Außenseite zumindest teilweise bedeckt.

11. Türsäule nach einem der Ansprüche 1 bis 10,
**dadurch gekennzeichnet,**
- **dass** die Türsäule (2) eine A-Säule oder eine B-Säule oder eine C-Säule oder eine D-Säule ist,
- **dass** die Türsäule (2) eine A-Säule bei einem Cabriolet-Fahrzeug ist.

## Claims

1. A door pillar for a supporting frame structure (1) of a vehicle body,
- with an upper section (3) which extends from a vehicle roof as far as a vehicle side edge (5),
- with a lower section (6) which extends from the vehicle side edge (5) in the direction of a vehicle floor,
wherein the door pillar (2) has a pillar body (8) which extends in the upper section (3) and is made of iron or iron alloy, and a pillar base (9) which is connected fixedly thereto and extends in the lower section (6), **characterized in that** the pillar base which extends in the lower section is configured as a single-part cast part from light metal or light metal alloy.

2. Door pillar according to Claim 1, **characterized**
- **in that** the pillar base (9) extends exclusively in the lower section (6),
- **in that** the pillar body (8) at least partially extends into the lower section (6),
- **in that** the pillar body (8) is connected in the lower section (6) to the pillar base (9).

3. Door pillar according to Claim 1 or 2, **characterized in that** the pillar body (8) extends from the vehicle roof as far as the vehicle side edge (5) or into the lower section (6) or as far as the vehicle floor.

4. Door pillar according to one of Claims 1 to 3, **characterized in that** the pillar body (8) has a roof connection zone (11) which is configured for forming a fixed connection to the vehicle roof and/or to a roof member (4).

5. Door pillar according to one of Claims 1 to 4, **characterized in that** the pillar base (9) has a floor connection zone (12) which is configured for forming a fixed connection to the vehicle floor.

6. Door pillar according to one of Claims 1 to 5, **characterized in that** the pillar base (9) has at least one structure connection zone (13) which is configured for forming a fixed connection to a part of the supporting frame structure (1).

7. Door pillar according to one of Claims 1 to 6, **characterized in that** the pillar body (8) is configured as a single-part or multi-part sheet-metal component or as a single-part cast part, in particular as a thinwalled cast part.

8. Door pillar according to one of Claims 1 to 7, **characterized in that** the pillar base (9) is cast onto the pillar body (8).

9. Door pillar according to one of Claims 1 to 8, **characterized in that** the pillar body (8) is screwed and/or riveted and/or welded and/or soldered to the pillar base (9).

10. Door pillar according to one of Claims 1 to 9, **characterized in that** the pillar body (8) in the lower section (6) at least partially covers the pillar base (9) on the outside thereof.

11. Door pillar according to one of Claims 1 to 10, **characterized**
- **in that** the door pillar (2) is an A-pillar or a B-pillar or a C-pillar or a D-pillar,
- **in that** the door pillar (2) is an A-pillar in a convertible.

## Revendications

1. Montant de porte pour une structure de châssis (1) d'une carrosserie de véhicule, comprenant :
- une portion supérieure (3) qui s'étend depuis un toit du véhicule jusqu'à une arête de bord du véhicule (5),
- une portion inférieure (6), qui s'étend depuis l'arête de bord du véhicule (5) dans la direction d'un plancher du véhicule,
le montant de porte (2) présentant un corps de montant (8) s'étendant dans la portion supérieure (3), en fer ou en alliage de fer, ainsi qu'une base de montant (9) s'étendant dans la portion inférieure (6) et connectée fixement au corps de montant,
**caractérisé en ce que** la base de montant s'étendant dans la portion inférieure est réalisée sous forme d'une pièce moulée d'une seule pièce en métal léger ou en alliage de métaux légers.

2. Montant de porte selon la revendication 1, **caractérisé en ce que**
- la base de montant (9) s'étend exclusivement dans la portion inférieure (6),
- le corps de montant (8) s'étend au moins en partie dans la portion inférieure (6),
- le corps de montant (8) est connecté à la base de montant (9) dans la portion inférieure (6).

3. Montant de porte selon la revendication 1 ou 2,
**caractérisé en ce que**
le corps de montant (8) s'étend depuis le toit du véhicule jusqu'à l'arête de bord du véhicule (5) ou jusque dans la portion inférieure (6) ou jusqu'au plancher du véhicule.

4. Montant de porte selon l'une quelconque des revendications 1 à 3,
**caractérisé en ce que**
le corps de montant (8) présente une zone de liaison de toit (11) qui est réalisée pour constituer une connexion solide au toit du véhicule et/ou à un support de toit (4).

5. Montant de porte selon l'une quelconque des revendications 1 à 4,
**caractérisé en ce que**
la base de montant (9) présente une zone de liaison au plancher (12) qui est réalisée pour constituer une connexion solide au plancher du toit.

6. Montant de porte selon l'une quelconque des revendications 1 à 5,
**caractérisé en ce que**
la base de montant (9) présente au moins une zone de liaison structurelle (13) qui est réalisée pour constituer une connexion solide à un constituant de la structure du châssis (1).

7. Montant de porte selon l'une quelconque des revendications 1 à 6,
**caractérisé en ce que**
le corps de montant (8) est réalisé sous forme de composant en tôle en une ou plusieurs parties, ou sous forme d'une pièce moulée d'une seule pièce, en particulier sous forme d'une pièce moulée à parois minces.

8. Montant de porte selon l'une quelconque des revendications 1 à 7,
**caractérisé en ce que**
la base de montant (9) est moulée au corps de montant (8).

9. Montant de porte selon l'une quelconque des revendications 1 à 8,
**caractérisé en ce que**
le corps de montant (8) est connecté à la base de montant (9) par vissage et/ou rivetage et/ou soudage et/ou brasage.

10. Montant de porte selon l'une quelconque des revendications 1 à 9,
**caractérisé en ce que**
le corps de montant (8) recouvre au moins en partie dans la portion inférieure (6) la base de montant (9) au niveau de son côté extérieur.

11. Montant de porte selon l'une quelconque des revendications 1 à 10,
**caractérisé en ce que**
- le montant de porte (2) est un montant A ou un montant B ou un montant C ou un montant D,
- le montant de porte (2) est un montant A dans le cas d'un véhicule cabriolet.
